# EUROPEAN PATENT APPLICATION

(11) **EP 2 466 190 A1**
(43) Date of publication of application: **20.06.2012**
(21) Application number: 10816921.0
(22) Date of filing: 15.04.2010
(51) Int. Cl.: F21S 2/00, G02F 1/13357, F21Y 101/02

(54) **LIQUID CRYSTAL DISPLAY DEVICE**

(30) Priority: 15.09.2009 JP 2009212713
(71) Applicant: Sharp Kabushiki Kaisha, Osaka-shi, Osaka 545-8522 (JP)
(72) Inventor: MINOURA, Kazunori, Osaka-shi, Osaka 545-8522 (JP); KIKUCHI, Katsutoshi, Osaka-shi, Osaka 545-8522 (JP)
(74) Representative: Müller-Boré & Partner Patentanwälte
(86) International application number: PCT/JP2010/056773
(87) International publication number: WO 2011/033808

(57) **Abstract**

Provided is a liquid crystal display device including a liquid crystal cell (3), a light source, and a light-guiding plate (1) that guides light from the light source to the liquid crystal cell (3), wherein a cutout (2) is formed on a sidewall of the light-guiding plate (1). The cutout (2) may have an inclined face inclining downward toward an outer side of the light-guiding plate (1). A reflecting member (5) may be inserted in the cutout (2). Further, a light-shielding member may be inserted in the cutout (2). In a region above the cutout of the light-guiding plate (1), an adhesion member (4) may be arranged on an upper face of the light-guiding plate (1) so that the light-guiding plate (1) and the liquid crystal cell (3) are adhered to each other.

## Description

### Technical Field

The present invention relates to a liquid crystal display device having a backlight.

### Background Art

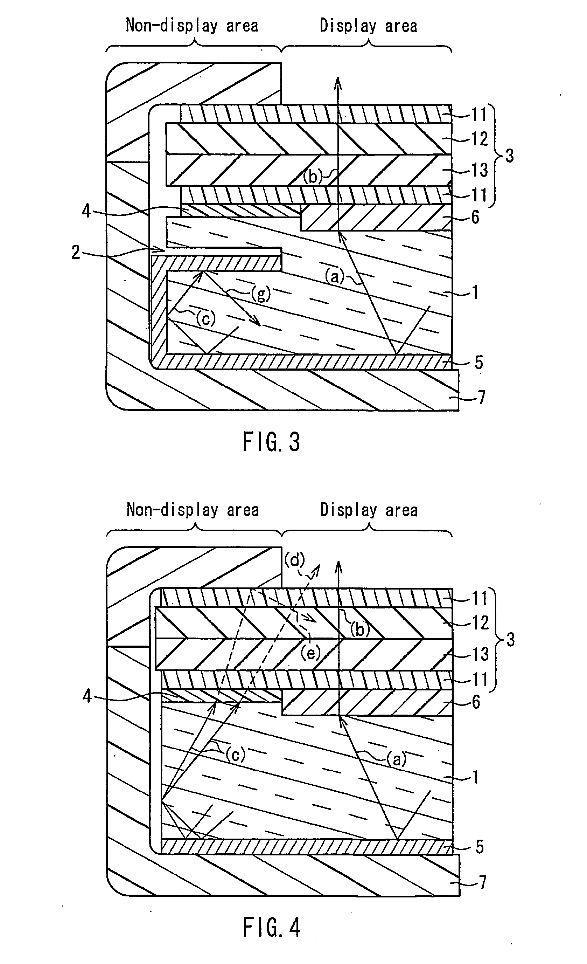

An exemplary liquid crystal display device that is designed for a smaller thickness is shown in FIG. 4. A liquid crystal cell 3 includes a CF substrate 12 in which counter electrodes, RGB color filters, etc., are arranged, and a TFT substrate 13 in which pixel electrodes, switching transistors, etc., are arranged. A liquid crystal layer is formed between the CF substrate 12 and the TFT substrate 13. Polarizing plates 11 are arranged on outer sides of the CF substrate 12 and the TFT substrate 13. A light-guiding plate 1 is arranged below the liquid crystal cell 3. An optical sheet 6 such as a diffusion sheet and a prism sheet is arranged between the liquid crystal cell 3 and the light-guiding plate 1. A reflecting sheet 5 is arranged under the light-guiding plate 1. Further, end portions of the liquid crystal cell 3 and the light-guiding plate 1 are adhered to each other by an adhesion member 4 such as a double-sided adhesive tape. By housing these members in a frame 7, the liquid crystal display device is configured. In this manner, since the liquid crystal cell 3 and the light-guiding plate 1 are adhered directly to each other, the thickness is reduced as compared with a conventional configuration in which the liquid crystal cell 3 and the light-guiding plate 1 are embedded in a resin frame for fixation.

A display surface of the liquid crystal display device is divided into a display area and a non-display area. In the non-display area, the liquid crystal cell 3 and the light-guiding plate 1 are fixedly adhered to each other by the adhesion member 4 such as a double-sided adhesive tape. An upper part of the liquid crystal cell 3 is covered by the frame 7.

A light source such as an LED is arranged on an end face of the light-guiding plate 1 that is not shown in FIG. 4. Light beams emitted by the light source enter the end face of the light-guiding plate 1, and are propagated while being reflected repeatedly by the upper and lower faces of the light-guiding plate 1 (arrow (a)). A scatter pattern for obtaining uniform brightness is formed on the upper or lower face of the light-guiding plate 1, whereby light beams having impinged on the scatter pattern are scattered in various directions, and in the display area, a part of the light beams enter the optical sheet 6 and is condensed in a vertical direction. Then the condensed light beams enter the liquid crystal cell 3 (arrow (b)), and are subjected to an ON/OFF control by the liquid crystal layer and the polarizing plates for achieving various displays.

Patent Document 1 discloses the liquid crystal display device in which an adhesion strength is enhanced by arranging a double-sided tape in a concave portion formed on the upper face of the light-guiding plate and fixedly adhering the liquid crystal cell to the light-guiding plate, while achieving a smaller thickness in the above-described manner.

### Prior Art Document

### Patent Document

[Patent Document 1] JP 2003-156740 A

### Disclosure of Invention

### Problem to be Solved by the Invention

As shown in FIG. 4, in the liquid crystal display device of the conventional technique, when light beams emitted by the light source are reflected repeatedly by the upper and lower faces of the light-guiding plate 1 and propagated to an end portion of the light-guiding plate 1, a part of the light beams is reflected by a side face of the light-guiding plate 1 and proceeds obliquely upward in the non-display area (hereinafter; such light beams are referred to as stray light (arrow (c)).

In the non-display area, the optical sheet 6 is not arranged between the light-guiding plate 1 and the liquid crystal cell 3, and the light-guiding plate 1 and the liquid crystal cell 3 are in close contact with each other by adhesive fixing. Because of this, stray light tends to leak from the light-guiding plate 1 into the liquid crystal cell 3. Further, in the non-display area, since pixel electrodes, switching transistors, etc., that control the liquid crystal are not arranged in the TFT substrate 13 of the liquid crystal cell 3, stray light leaked into the liquid crystal cell 3 directly leaks into the display area as indicated by an arrow (d) without being controlled by the liquid crystal layer, or is reflected by the frame 7 of the non-display area and retuned to the liquid crystal cell 3 of the display area as indicated by an arrow (e).

If such leaked light that cannot be controlled by the liquid crystal layer (e.g., light indicated by the arrows (d) and (e)) directly enters the CF substrate 12 in the periphery of the display area, the leaked light passes through each of the RGB color filters uniformly. This causes a problem that only the periphery of the display area illuminates locally and the color of the display become whitish, which decreases the display quality.

By reducing an arrangement area of the adhesion member 4 where the light-guiding plate 1 and the liquid crystal cell 3 are in close contact with each other, such light leakage is reduced to some extent. However, the adhesion strength between the light-guiding plate 1 and the liquid crystal cell 3 decreases accordingly.

Further, by adding a light-shielding member at an arrangement portion of the adhesion member 4 that allows the light-guiding plate 1 and the liquid crystal cell 3 to be adhered to each other, the light leakage from the light-guiding plate 1 into the liquid crystal cell 3 is solved. However, the addition of the light-shielding member prevents the liquid crystal display device from being thin.

The present invention has been achieved in view of the above problems, and its object is to suppress light leakage in the periphery of the display area.

### Means for Solving Problem

A liquid crystal display device according to the present invention includes: a liquid crystal cell; a light source; and a light-guiding plate that guides light from the light source to the liquid crystal cell, wherein a cutout is formed on a sidewall of the light-guiding plate. The cutout has an inclined face inclining downward toward an outer side of the light-guiding plate. A reflecting member is inserted in the cutout. A light-shielding member is inserted in the cutout. In a region above the cutout of the light-guiding plate, an adhesion member is arranged on an upper face of the light-guiding plate so that the light-guiding plate and the liquid crystal cell are adhered to each other.

### Effect of the Invention

A liquid crystal display device according to the present invention can realize a thin liquid crystal display device that suppresses light leakage from an end portion of a light-guiding plate and has excellent display quality.

### Brief Description of Drawings

[FIG. 1] FIG. 1 is a cross-sectional view showing an end portion of a liquid crystal display device according to Embodiment 1 of the present invention.
[FIG. 2] FIG. 2 is a cross-sectional view showing an end portion of a liquid crystal display device according to Embodiment 2 of the present invention.
[FIG. 3] FIG. 3 is a cross-sectional view showing an end portion of a liquid crystal display device according to Embodiment 3 of the present invention.
[FIG. 4] FIG. 4 is a cross-sectional view showing an end portion of a conventional liquid crystal display device.

### Description of the Invention

Hereinafter, embodiments of the present invention will be described based on the drawings.

### Embodiment 1

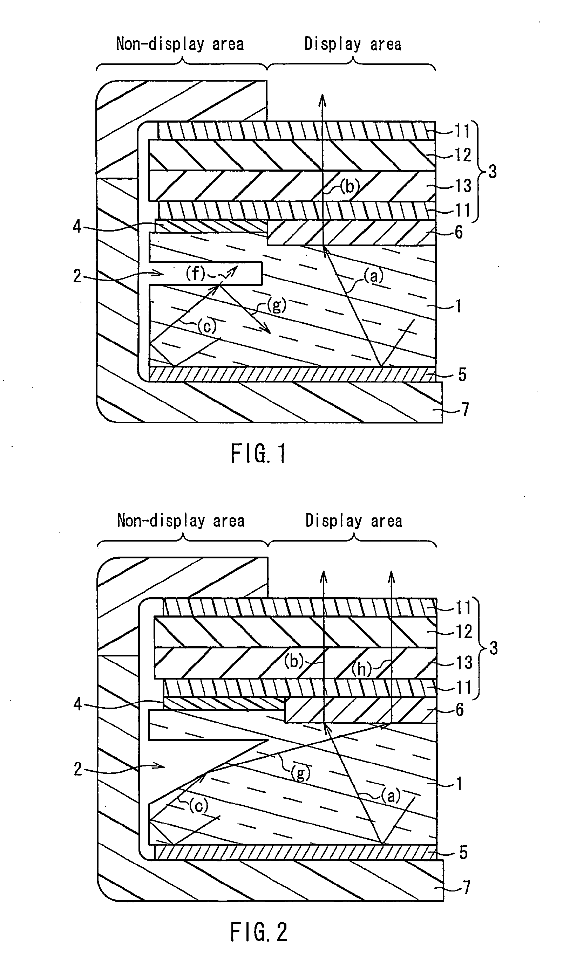

FIG. 1 is a cross-sectional view showing an end portion of a liquid crystal display device according to Embodiment 1 of the present invention. A liquid crystal cell 3 includes a CF substrate 12 in which counter electrodes, RGB color filters, etc., are arranged, and a TFT substrate 13 in which pixel electrodes, switching transistors, etc., are arranged. A liquid crystal layer is formed between the CF substrate 12 and the TFT substrate 13. Polarizing plates 11 are arranged on outer sides of the CF substrate 12 and the TFT substrate 13. A light-guiding plate 1 is arranged below the liquid crystal cell 3. An optical sheet 6 such as a diffusion sheet and a prism sheet is arranged between the liquid crystal cell 3 and the light-guiding plate 1. Further, a reflecting sheet 5 is arranged under the light-guiding plate 1. Note here that, in a non-display area, the optical sheet 6 is not arranged, and an adhesion member 4 such as a double-sided adhesive tape is arranged on an upper face end portion of the light-guiding plate 1 so as to adhere the liquid crystal cell 3 to the light-guiding plate 1. The liquid crystal display device is configured by housing these members in a frame 7.

A light source such as an LED is arranged on an end face of the light-guiding plate 1 that is not shown in FIG. 1. Light beams emitted by the light source enter the end face of the light-guiding plate 1, and are propagated while being reflected repeatedly by the upper and lower faces of the light-guiding plate 1 (arrow (a)). A scatter pattern for obtaining uniform brightness is formed on the upper or lower face of the light-guiding plate 1, whereby light beams having impinged on the scatter pattern are scattered in various directions, and in a display area, a part of the light beams enter the optical sheet 6 and is condensed in a vertical direction. Then the condensed light beams enter the liquid crystal cell 3 (arrow (b)), and are subjected to an ON/OFF control by passing through the liquid crystal layer and the polarizing plates for achieving various displays.

In the non-display area, a cutout 2 is formed in the middle of a sidewall of the light-guiding plate 1, with an arrangement portion of the adhesion member 4 on the upper face of the light-guiding plate 1 being left. The cutout 2 may be formed simultaneously at the time of molding the light-guiding plate 1, or may be formed by cutting or laser-processing the molded light-guiding plate 1.

When light enters a border plane where substances of different refractive indexes contact with each other, the following reflections occur in dependence on a difference in the refractive indexes and an incident angle of the light: Fresnel reflection in which a part of the incident light passes through the border plane and the remaining light is reflected; and total reflection in which all of the incident light is reflected without passing through the border plane. The present invention utilizes the above-described phenomena. By forming the hollow cutout 2 in the sidewall of the light-guiding plate 1 so as to cause stray light that is reflected by the sidewall of the light-guiding plate 1 (arrow (c)) to be reflected at an interface between the light-guiding plate 1 and air space of the cutout 2 (arrow (g)), a proportion of stray light passing through the non-display area of the liquid crystal cell 3 (arrow (f)) is reduced, which suppresses the light leakage into the non-display area.

Especially, stray light tends to leak into the liquid crystal cell 3 from the arrangement portion of the adhesion member 4 where the light-guiding plate 1 and the liquid crystal cell 3 are in close contact with each other. By providing the cutout 2 such that the cutout overlaps with the arrangement portion of the adhesion member 4, an effect of suppressing the light leakage can be enhanced.

Further, if a width of the cutout 2 is at least several times larger than the wavelength of the light source, Fresnel reflection or total reflection occurs, which reduces the proportion of stray light passing through the cutout 2.

In the present embodiment, by providing the cutout 2 in the sidewall of the light-guiding plate 1 so as to cause stray light to be subjected to Fresnel reflection or total reflection at the interface between the light-guiding plate 1 and the air space of the cutout 2, the leakage of stray light into the non-display area can be suppressed, whereby the decrease in display quality in the periphery of the display area due to light leakage can be prevented.

Further, by forming the cutout 2 up to a boundary between the non-display area and the display area such that the whole cutout 2 overlaps with the arrangement portion of the adhesion member 4, the light leakage from the arrangement portion of the adhesion member 4 can be suppressed, whereby the adhesion strength can be enhanced by increasing an arrangement area of the adhesion member 4.

Further, since a light-shielding member for shielding light leakage need not be placed at the arrangement portion of the adhesion member 4, it is possible to reduce the thickness of the liquid crystal display device.

### Embodiment 2

FIG. 2 is a cross-sectional view showing an end portion of a liquid crystal display device according to Embodiment 2 of the present invention. The configuration of the present embodiment is the same as the configuration of Embodiment 1 except for the shape of the cutout 2 of the light-guiding plate 1. Therefore, the explanation of the same components will not be repeated.

As shown in FIG. 2, in the liquid crystal display device of the present invention, in the sidewall of the light-guiding plate 1, a hollow cutout (V-notch) 2 is formed that has an inclined face inclining downward toward an outer side of the light-guiding plate 1. By providing the cutout 2 having such an inclined face, stray light that is reflected by the sidewall of the light-guiding plate 1 and is going to leak into the non-display area of the liquid crystal cell 3 (arrow (c)) enters the inclined face of the cutout 2 at shallow angles. Therefore, a proportion of the total reflection (arrow (g)) occurring at the interface between the light-guiding plate 1 and the air space of the cutout 2 is increased, which substantially causes no stray light leakage into the non-display area.

Further, since the reflected light beams are reflected at shallow angles that are equivalent to their incident angles with respect to the inclined face, they are returned to the display area side inside the light-guiding plate 1. The light beams that reach the lower part of the display area (arrow (g)) enter the optical sheet 6, together with normal light beams that are propagated while being reflected by the upper and lower faces of the light-guiding plate 1. Then, these light beams are condensed in the vertical direction, pass through the liquid crystal cell 3 (arrow (b), arrow (h)), and are subjected to the ON/OFF control for achieving various displays.

According to the present embodiment, stray light occurring at the sidewall of the light-guiding plate 1 can be prevented from leaking into the liquid crystal cell 3 of the non-display area. Further, since stray light on the non-display area side that had never been used for display is reflected by the inclined face of the cutout 2 and returned to the display area side, the amount of light of the display area is increased, which achieves displays with excellent contrast.

Although FIG. 2 shows the wedge-shaped cutout 2 whose upper side is parallel to the upper face of the light-guiding plate, the shape of the upper side of the cutout is not limited thereto, as long as a lower side of the cutout 2 is an inclined face inclining downward toward the outer side of the light-guiding plate.

### Embodiment 3

FIG. 3 is a cross-sectional view showing an end portion of a liquid crystal display device according to Embodiment 3 of the present invention. The configuration of the present embodiment is the same as the configuration of Embodiment 1 except that a reflecting member is placed in a hollow of the cutout 2 of the light-guiding plate 1. Therefore, the explanation of the same components will not be repeated.

As shown in FIG. 3 for example, in the liquid crystal display device of the present invention, an end portion of the reflecting sheet 5 arranged under the light-guiding plate 1 is extended, and the expended portion of the reflecting sheet 5 is bent along the side face of the light-guiding plate 1 so as to be inserted in the cutout 2. Further, inside the cutout 2, the reflecting sheet 5 need not contact with an upper face of the cutout 2, but is arranged so as to contact with the lower face (light-reflecting surface) of the cutout 2. Moreover, the reflecting member to be arranged in the cutout 2 may be a separate reflecting member from the reflecting sheet 5 that is arranged under the light-guiding plate 1. Further, the reflecting member such as a reflecting plate may be arranged in the cutout 2.

According to the present embodiment, since stray light is reflected by the reflecting member (arrow (g)), light leakage can be suppressed reliably without increasing the thickness for the reflecting member at the arrangement portion of the adhesion member 4, etc. Thereby, it is possible to provide a thin display device with excellent display quality.

Further, similarly to the present embodiment, also in the hollow cutout 2 of Embodiment 2, a reflecting member may be arranged along the inclined face. Also in this case, since stray light is reflected by the reflecting member arranged on the inclined face, light leakage can be suppressed reliably without increasing the thickness for the reflecting member at the arrangement portion of the adhesion member 4, etc. Further, since the amount of light returned to the display area side is increased, the contrast is enhanced. Thereby, it is possible to provide a thin display device with excellent display quality.

Further, instead of inserting the reflecting member in the hollow cutout 2, a light-shielding member such as carbon black may be inserted therein for shielding light leakage. By inserting the light-shielding member in the hollow cutout 2, light leakage can be suppressed reliably without increasing the thickness for the light-shielding member at the arrangement portion of the adhesion member 4, etc. Thereby, it is possible to provide a thin display device with excellent display quality.

## Claims

1. A liquid crystal display device, comprising:
a liquid crystal cell;
a light source; and
a light-guiding plate that guides light from the light source to the liquid crystal cell,
wherein a cutout is formed on a sidewall of the light-guiding plate.

2. The liquid crystal display device according to claim 1, wherein the cutout has an inclined face inclining downward toward an outer side of the light-guiding plate.

3. The liquid crystal display device according to claims 1 or 2, wherein a reflecting member is inserted in the cutout.

4. The liquid crystal display device according to claims 1 or 2, wherein a light-shielding member is inserted in the cutout.

5. The liquid crystal display device according to claims 1 or 4, wherein, in a region above the cutout of the light-guiding plate, an adhesion member is arranged on an upper face of the light-guiding plate so that the light-guiding plate and the liquid crystal cell are adhered to each other.
